# EUROPÄISCHE PATENTSCHRIFT

(11) **EP 2 684 475 B1**
(45) Veröffentlichungstag und Bekanntmachung des Hinweises auf die Patenterteilung: **14.02.2018**
(21) Anmeldenummer: 13003464.8
(22) Anmeldetag: 09.07.2013
(51) Int. Cl.: A43B 7/14, A43B 13/12, B29D 35/14

(54) **SOHLE FÜR DIABETIKER-SCHUTZSCHUHE SOWIE DIABETIKER-SCHUTZSCHUH MIT EINER SOLCHEN SOHLE**
SOLE FOR DIABETIC SAFETY SHOES AND DIABETIC SAFETY SHOES WITH SUCH A SOLE
SEMELLE POUR CHAUSSURE DE SÉCURITÉ POUR DIABÉTIQUES AINSI QUE CHAUSSURE DE SÉCURITÉ POUR DIABÉTIQUES ÉQUIPÉE D'UNE TELLE SEMELLE

(30) Priorität: 09.07.2012 DE 202012006521 U
(43) Veröffentlichungstag der Anmeldung: 15.01.2014
(73) Patentinhaber: Stuppy Schuhfabrik GmbH, 66509 Rieschweiler-Mühlbach (DE)
(72) Erfinder: Stuppy, Axel, 66509 Rieschweiler-Mühlbach (DE)
(74) Vertreter: Patentanwälte Dr. Keller, Schwertfeger

(56) Entgegenhaltungen:
- EP-A1- 0 373 336
- EP-A1- 0 890 322
- EP-A1- 1 869 989
- EP-A2- 1 818 028
- US-A1- 2003 136 024

## Beschreibung

Die Erfindung betrifft eine Sohle für Diabetiker-Schutzschuhe gemäß dem Oberbegriff des Patentanspruchs 1 sowie einen Schuh mit einer solchen Sohle gemäß dem unabhängigen Patentanspruch 13.

Die Sohle eines Schuhs bestimmt zu einem großen Teil die Dämpfung, das Abrollverhalten, die Druckverteilung sowie die stabilisierende Wirkung des Schuhs und hat damit maßgeblichen Einfluss auf dessen Tragekomfort. Durch geeignete Auswahl des Sohlenmaterials, sowie der Form und Dickenverteilung der Sohle kann Einfluss auf die oben genannten Eigenschaften genommen werden.

Dieser Umstand kommt vor allem bei medizinischem Schuhwerk wie z. B. Verbandschuhen oder Diabetiker-Schutzschuhen verstärkt zum Tragen, wo nach postoperativen Eingriffen Druckkonzentrationen auf den Fuß zu vermeiden sind oder wo infolge Neuropathie das Schmerzempfindevermögen beeinträchtigt ist, so dass örtliche Überbeanspruchung des Fußes nicht mehr wahrgenommen werden. In diesen Fällen soll durch geeignete Ausbildung der Sohle eine Druckverteilung auf einen größeren Fußbereich, ein gleichmäßiges Abrollen und eine bestmögliche Stabilisierung des Fußes gewährleistet werden.

Es ist bekannt, konfektionierte Sohlen und Einlegesohlen mit mehrlagigem Aufbau herzustellen, wobei den unterschiedlichen Lagen unterschiedliche Funktionen zugeordnet sind. Bei derartig hergestellten Sohlen und Einlegesohlen ist der Anteil an Handarbeit verhältnismäßig hoch, was die Sohlen und Einlegesohlen und damit den Schuh verteuert.

In der DE 20 2008 010473 U1 ist eine Sohle beschrieben, die aus einem thermoplastischen Kunststoff im Wege des Spritzgießens hergestellt wird, wobei mit dem Spritzgießen ein Füllteil aus expandiertem Polypropylen in den Fersenbereich der Sohle eingebettet wird. Eine solche Sohle ermöglicht zwar eine wirtschaftliche Herstellungsweise und das Füllteil verleiht der Sohle gute Dämpfungseigenschaften, jedoch werden erhöhte Anforderungen an eine fußstabilisierende Wirkung und ein gleichmäßiges Abrollverhalten, insbesondere im Hinblick auf deren Verwendung bei medizinischen Schuhen wie Diabetiker-Schutzschuhen oder Verbandschuhen nicht erfüllt.

Die DE 2 005 455 offenbart einen Keilabsatz für Damenschuhe, bei dem eine Gelenkstütze zur Verstärkung des Anschlusses des Keilabsatzes an den übrigen Sohlenbereich integriert ist. Die Gelenkstütze stellt jedoch ein reines Verstärkungselement dar und ist daher nicht in der Lage, das Dämpfungs- und Abrollverhalten sowie die Druckverteilung und stabilisierende Wirkung der Sohle gezielt zu beeinflussen.

Gegenstand der DE 80 31 605 U1 ist ein Reitstiefel, der in einem Arbeitstakt durch Spritzgießen hergestellt ist, mit der Folge, dass Schaft und Sohle aus demselben notwendigerweise verhältnismäßig weichen und biegsamen Material bestehen. Durch Einbetten einer biegesteifen Einlegesohle in die Sohle des Reitstiefels, soll trotz des weichen Grundmaterials eine vor allem im Bereich des Steigbügels belastbare und verhältnismäßig steife Sohle ausgebildet werden. Zur Verankerung der Einlegesohle innerhalb der Sohle weist die Einlegesohle Löcher mit einem umlaufenden Bund auf, durch welche das Spritzgussmaterial während der Herstellung des Stiefels hindurchtreten kann. Dabei ist die Sohle im Bereich nach innen jeweils vom Bund eines Loches durchsetzt.

Die US 2003/136 024 A1 beschreibt einen handgenähten Schuh, an dessen perforierte Mittelsohle eine Laufsohle angespritzt wird. Dabei fließt das noch flüssige Material der Laufsohle durch Öffnungen in der perforierten Mittelsohle, welche auf diese Weise in die Laufsohle eingebettet wird. Die perforierte Mittelsohle besteht aus einem weichen Material oder einem weichen bis mittelsteifen Material.

Diese Ausführungsformen von im Spritzgussverfahren hergestellter Sohlen sind für eine Verwendung in Diabetiker-Schutzschuhen völlig ungeeignet, da sie sich nicht an Bedürfnissen von Diabetiker orientieren.

Die EP 1 869 989 A1 beschreibt eine Schuhsohle mit einer in die Außensohle integrierten starren Mittelsohle und einem im Fersenbereich integrierten Dämpfungskissen. Das Dämpfungskissen besteht aus einem Material geringerer Festigkeit als die übrige Sohle und weist im Inneren ein elastisches Federelement auf. Ferner sind im Bereich der Zehen seitliche Einschnitte in die Mittelsohle eingebracht.

Die EP 0 890 322 A1 beschreibt eine Schuhsohle mit einer Aufbiegung im Ballen- und Zehenbereich, was durch Integration einer elastischen Platte in die Schuhsohle erreicht wird. Der Spreizungswinkel beträgt dabei zwischen 5° und 20°.

Die EP 1 818 028 A2 beschreibt einen Entlastungsschuh bei postoperativen Wunden mit einer Sohle, deren Unterseite im Ballen- und Zehenbereich eine Aufbiegung aufweist und an ihrer dem Fuß zugeordneten Oberseite plan ausgebildet ist. Zusätzlich weist die Sohle ein steifes Einsatzteil in dem, dem Fuß entsprechenden Gewölbebereich auf.

Die EP 0 373 336 A1 beschreibt eine Einlage für einen Schuh, wobei die Einlage in Sohlenlängsrichtung vertikal biegeweich und in Sohlenquerrichtung eine gegenüber der Laufsohle erhöhte Biegesteifigkeit aufweist.

Vor diesen Hintergrund besteht die Aufgabe der Erfindung darin, eine Sohle für Diabetiker-Schutzschuhe mit erhöhtem Tragekomfort und verbesserter Schutzwirkung bereitzustellen, die auf wirtschaftliche Art und Weise in großen Stückzahlen hergestellt werden kann.

Diese Aufgabe wird durch eine Sohle mit den Merkmalen den Patentanspruchs 1 sowie einem Schuh mit den Merkmalen des unabhängigen Patentanspruchs 13 gelöst.

Vorteilhafte Ausführungsformen ergeben sich aus den Unteransprüchen.

Der Grundgedanke der Erfindung besteht zum einen darin, eine erfindungsgemäße sich aus einer Laufsohle und einer Versteifungssohle zusammensetzende Sohle für Diabetiker-Schutzschuhe in an sich bekannter Art und Weise durch Spritzgießen herzustellen. Die damit einhergehende Möglichkeit zur Automatisierung bringt einen wesentlichen wirtschaftlichen Vorteil gegenüber der Herstellung konfektionierter Schuhsohlen mit sich. Erfindungsgemäß ist dabei die Integration der Versteifungssohle in die Sohle bereits während des Herstellens der Laufsohle vorgesehen, also während des Spritzgießens. Dazu wird die Versteifungssohle innerhalb der Spritzgussform fixiert, wobei der Verbund zwischen Laufsohle und Versteifungssohle im Zuge des Spritzgießens und nachträglichen Erstarrens hergestellt wird. Weitere Maßnahmen zur Befestigung der Versteifungssohle wie z. B. Kleben, Nageln oder dergleichen sind daher nicht notwendig.

Zum anderen werden durch die Integration der Versteifungssohle in die Sohle die für Diabetiker-Schutzschuhe wichtigen Eigenschaften wie Dämpfung, Druckverteilung, Stabilisierung und Abrollverhalten der Sohle und damit des Schuhs bestimmt. Die Versteifungssohle ist durch geeignete konstruktive Ausbildung vor allem hinsichtlich ihrer Form und Biegesteifigkeit an diese funktionellen Aufgaben angepasst. Die Besonderheit der Erfindung besteht dabei darin, dass die verbundsteigernden Mittel in Form von Öffnungen in der Versteifungssohle eine Doppelfunktion erfüllen, nämlich einerseits die sichere Einbettung der Versteifungssohle in die Laufsohle und andererseits die Sicherstellung und Verbesserung der Dämpfung, Druckverteilung, Stabilisierung und des Abrollverhaltens der Sohle.

Bedingt durch die beim Abrollen auftretende Scher-und Ablösekräfte besteht die Gefahr, dass der Verbund zwischen Laufsohle und Versteifungssohle aufgrund unterschiedlicher mechanischer Eigenschaften der verwendeten Materialien verloren geht. In der Folge kann sich die Laufsohle gegenüber der Versteifungssohle relativ bewegen, was sich im Weiteren als unerwünschtes Quietschen bemerkbar macht, aber auch Ursache für Faltenbildung und Verschleiß infolge Materialermüdung sein kann.

Zur Überwindung dieser Problematik wird gemäß der Erfindung vorgeschlagen, verbundsteigernde Mittel an der Oberfläche der Versteifungssohle vorzusehen. Diese bewirken eine Vergrößerung der Verbundkraft und damit eine Verringerung der Gefahr des Ablösens. Die verbundsteigernden Mittel umfassen Öffnungen in der Versteifungssohle, die beim Spritzgießen dem plastischen Material der Laufsohle den Durchtritt durch die Öffnungen ermöglichen, so dass mit dem anschließenden Erhärten der Laufsohle Stege ausgebildet werden, die den Sohlenbereich oberhalb der Versteifungssohle mit dem Bereich der unterhalb der Versteifungssohle verbinden und auf diese Weise ein Ablösen der Laufsohle von der Versteifungssohle verhindern.

Zusätzlich zu den Öffnungen in der Versteifungssohle können verbundsteigernde Mittel gemäß der Erfindung auch chemischer Natur sein, wie z. B. ein Haftvermittler, der vor dem Spritzgießen auf die Versteifungssohle aufgebracht wird. Aufgrund dessen chemischer Wirkung wird die übertragbare flächenbezogene Adhäsionskraft in der Kontaktfuge vergrößert.

Ebenso geeignet sind zusätzliche verbundsteigernde Mittel, deren Wirksamkeit auf physikalischen Zusammenhängen beruht. Beispielsweise können die verbundsteigernden Mittel durch eine Oberflächenprofilierung wie zum Beispiel einer Riffelung gebildet sein. Die Oberflächenprofilierung führt zu einer Vergrößerung der Kontaktflächen zwischen Laufsohle und Versteifungssohle, so dass die flächenbezogenen Adhäsionskräfte über eine größere Fläche wirksam sind. Hinzu kommt eine verbundverbessernde Verzahnungswirkung aufgrund der unebenen Oberflächenausbildung.

Alternativ oder kumulativ hierzu umfasst die Erfindung zusätzliche verbundsteigernde Mittel in Form von Elementen, die aus der Oberfläche der Versteifungssohle ragen und mit ihrem Einbinden in die Laufsohle während des Spritzgießens eine Verankerungswirkung entfalten. Zu diesem Zweck können die Verbundelemente punktförmig ausgebildet sein und/oder linienförmig an der Oberfläche der Versteifungssohle entlang laufen.

Die Versteifungssohle kann sich über die gesamte Länge der Laufsohle erstrecken. Erfindungsgemäß erstreckt sich die Versteifungssohle zumindest über den Zehenbereich und den Ballenbereich der Laufsohle erstreckt, zusätzlich über den Längsgewölbebereich der Laufsohle. Damit ist eine ausreichende Seitenstabilität im Ballenbereich gewährleistet bei gleichzeitiger optimaler Dämpfung im Fersenbereich.
Die Öffnungen in der Versteifungssohle sind vorteilhafterweise rund mit einem bevorzugten Durchmesser zwischen 1 mm und 10 mm, insbesondere zwischen 3 mm und 8 mm. Die auf diese Weise von dem Material der Laufsohle gebildeten Stege sorgen für eine sichere und über die Fläche gleichmäßig verteilte Kraftaufnahme beim Abrollen und ein gleichmäßiges Abrollverhalten.
Dabei bestimmt die Lochfläche aller Öffnungen einer erfindungsgemäßen Sohle sowohl die Verankerungskraft, mit der die Versteifungssohle in der Laufsohle eingebettet ist, als auch die Biegesteifigkeit der Versteifungssohle, da die Öffnungen den tragenden Sohlquerschnitt schwächen und somit die Versteifungssohle weicher machen. Hinsichtlich einer ausreichender Verankerungskraft und Biegesteifigkeit hat sich eine Lochfläche von mindestens 3 % und/oder maximal 15 % der Gesamtfläche der Versteifungssohle als geeignet erwiesen. Vorzugsweise liegt der Anteil der Lochfläche zwischen 4 % und 9 %.
Vorzugsweise nimmt die Dicke der Versteifungssohle von ihrem dem Fersenbereich zugeordneter Rand in Richtung des dem Zehenbereich zugeordneten Randes kontinuierlich ab. Es ergibt sich somit eine in Richtung des Zehenbereichs abnehmende Steifigkeit der Versteifungssohle, so dass diese in Richtung des Zehenbereichs flexibler wird. Auf diese Weise wird ein verbessertes Abrollverhalten der Sohle erreicht, ohne dass dabei die Zehen eines Schuhträgers unverhältnismäßig stark überstreckt werden.

Der Schutz der Zehen vor einem Überstrecken im Zuge des Abrollens wird erfindungsgemäß erreicht, indem die Lochfläche der dem Ballenbereich (B) zugeordneten Öffnungen größer ist als die der benachbarten Bereiche. Dadurch wird die Verstärkungssohle in diesem Bereich weicher, ohne die Schutzfunktion der anderen Bereiche zu schmälern.
Durch eine Versteifungssohle mit einer maximalen Biegesteifigkeit in dem den Längsgewölbebereich C bildenden Teil wird ein ergonomisches, die Abrollbewegung sanft einleitendes Abrollverhalten begünstigt.

Eine weitere Ausführungsform der Erfindung sieht zur Steuerung der Biegesteifigkeit der Versteifungssohle vor, dass drei oder mehr Öffnungen auf einer Linie quer zur Mittellinie der Versteifungssohle angeordnet sind. Im Bereich der Linie wird die Biegesteifigkeit lokal herabgesetzt, so dass dadurch gezielt Einfluss auf das Abrollverhalten genommen werden kann.

Eine stabilisierende Wirkung der Versteifungssohle wird erfindungsgemäß erreicht, indem die in Längserstreckungsrichtung der Versteifungssohle wirksame Biegesteifigkeit geringer ist als die in Quererstreckungsrichtung wirkende. Dies kann beispielsweise durch eine Geometrie der Versteifungssohle realisiert werden, die in Querrichtung, also quer zur Mittellinie, über einen großen Teil einen im Wesentlichen planen Verlauf der Versteifungssohle vorsieht, in Längsrichtung jedoch einen Verlauf mit ausgeprägter Krümmung, was einem seitlichen Wegkippen des Fußes entgegengewirkt. Da die Versteifungssohle gegenüber der Laufsohle eine höhere Steifigkeit aufweist, ist die Versteifungssohle zur Formgebung der Laufsohle und damit der Festlegung der Spitzensprengung eines Diabetiker-Schutzschuhs geeignet. Vorteilhafterweise ist die Profilierung der Versteifungssohle in Längserstreckungsrichtung so gewählt, dass die Spitzensprengung eines mit einer erfindungsgemäßen Versteifungssohle ausgerüsteten Diabetiker-Schutzschuhs mindestens 15 mm, vorzugsweise mindestens 20 mm beträgt, wodurch sein verbessertes Abrollverhalten einstellt.
Die Erfindung wird nachstehend anhand eines in den Zeichnungen dargestellten Ausführungsbeispiels näher erläutert, wobei weitere Merkmale und Vorteile der Erfindung offenbar werden.
Es zeigt
- Figur 1: einen Längsschnitt durch eine erfindungsgemäße Sohle entlang der in Figur 2 dargestellten Linie I - I, und
- Figur 2: einen Horizontalschnitt durch eine erfindungsgemäße Sohle entlang der in Figur 1 dargestellten Linie II - II.

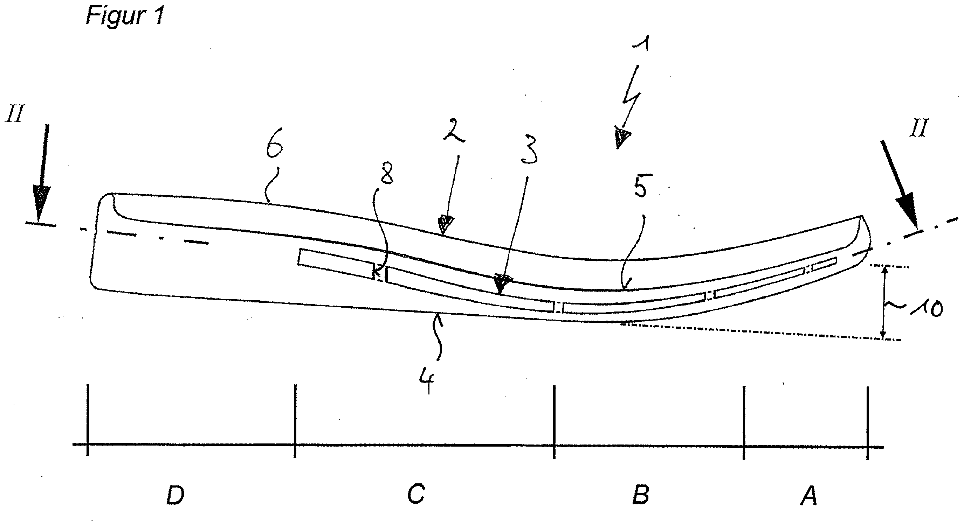

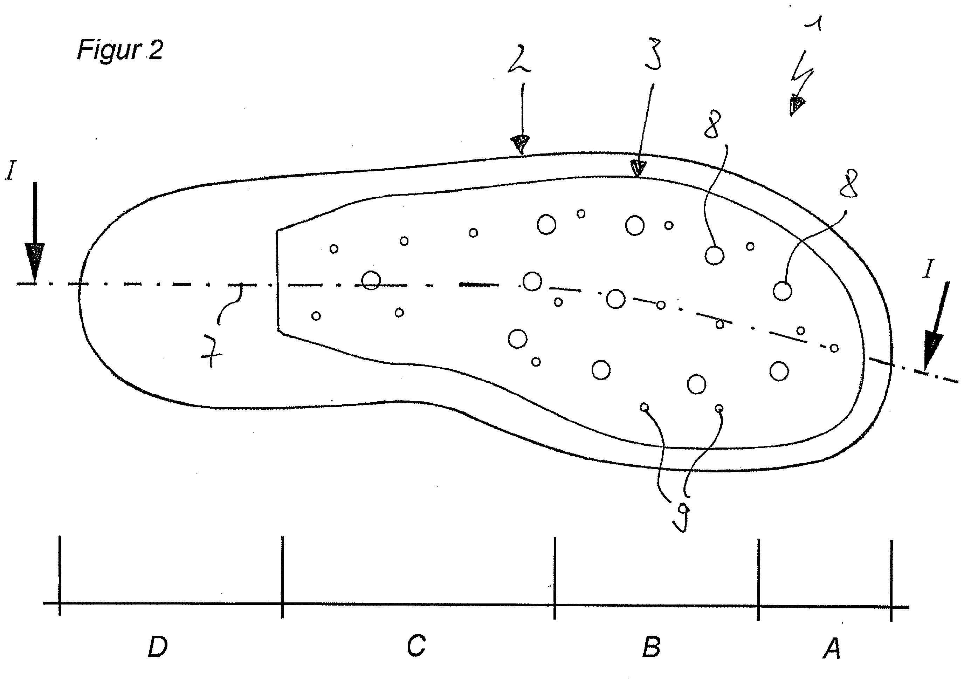

Die Figuren 1 und 2 zeigen eine erfindungsgemäße Sohle 1 in einem Längsschnitt und einem Horizontalschnitt entlang der jeweils angedeuteten Schnittführung. Die Sohle 1 besitzt einen zweiteiligen Aufbau mit einer Laufsohle 2 und einer darin integrierten Versteifungssohle 3. Die Laufsohle 2 besteht aus einem elastischen schaumartigen Kunststoff wie z. B. Polyurethan oder EVA, der eine Herstellung der Laufsohle 2 im Spritzgussverfahren erlaubt. Dabei wird die Spritzgussmasse durch Einspritzen in die Kavität einer zweiteiligen Form hergestellt. Die Laufseite der Laufsohle 2 ist mit dem Bezugszeichen 4 gekennzeichnet, die gegenüberliegende Oberseite mit dem Bezugszeichen 5. In Figur 1 erkennt man einen den Rand einer Laufsohle 2 an der Oberseite 5 umlaufenden Wulst 6. Die Mittellinie 7 ist in Figur 2 strichpunktiert dargestellt. Die Sohle 1 ist entlang der Mittellinie 7 ausgehend vom in der Zeichenebene dargestellten rechten vorderen Sohlenende untergliedert in einen Zehenbereich A, einen Ballenbereichs B, einen Längsgewölbebereiches C und einen Fersenbereich D.

In die Laufsohle 2 ist eine plattenförmige Versteifungssohle 3 eingebettet, die aus einem elastischen, gegenüber der Laufsohle 2 steiferen Material wie zum Beispiel Polyamid besteht. Wie aus Figur 2 ersichtlich folgt die Versteifungssohle 3 dem Randverlauf der Laufsohle 2 in einem etwa gleichbleibenden Randabstand. Lediglich das dem Fersenbereich D zugewandte Ende weist einen sich konisch verjüngenden Abschnitt auf.

Wie aus Figur 1 hervorgeht verläuft die Versteifungssohle 3 etwa parallel und im Abstand zur Oberseite 5 der Laufsohle, wobei die minimale Überdeckung mindestens 2 mm beträgt. Auf diese Weise ist die Versteifungssohle 3 vollständig von der Laufsohle 2 umhüllt, was sowohl den Tragekomfort als auch das Erscheinungsbild verbessern. Von ihrem dem Zehenbereich A zugeordneten Rand ausgehend nimmt die Dicke der Versteifungssohle 3 in Richtung des gegenüberliegenden Rand zu, wodurch die elastischen Eigenschaften und damit das Abrollverhalten bestimmt werden. Durch die abnehmende Dicke in Richtung des vorderen Sohlenrandes ist die Versteifungssohle 3 und damit die Sohle 1 dort weniger steif und kann beim Abrollen leichter verformt werden. Im vorliegenden Ausführungsbeispiel beträgt die maximale Dicke der Versteifungssohle 3 4 mm und die minimale Dicke 1 mm, bevorzugt sind eine maximale Dicke von 3 mm und minimale Dicke von 2 mm.

Um die Steifigkeit der Versteifungssohle 3 in Längsgewölbebereich C allmählich zu erhöhen, weist die Versteifungssohle 3 dort eine sich zwischen den seitlichen Längsrändern erstreckende Wölbung auf, die Dicke der Versteifungssohle 3 ist also am seitlichen Längsrand geringer als im Bereich der Mittellinie 7, wobei die Wölbung in Richtung des dem Fersenbereich D zugeordneten Querrand allmählich zunimmt.

Aus den Figuren 1 und 2 geht zudem hervor, dass in die Versteifungssohle 3 größere Öffnungen 8 und kleinere Öffnungen 9 eingeformt sind. Die Öffnungen 8 und 9 besitzen im vorliegenden Fall Kreisform mit dem Vorteil einer einfachen Herstellung und guter Lastaufnahme, wobei andere Formen wie zum Beispiel Rechteckform oder ovale Form ebenfalls im Rahmen der Erfindung liegen. Ebenso kann die Größe der Öffnungen 8, 9 variieren, beispielsweise zwischen 3 mm und 10 mm. Die Öffnungen 8 oder 9 können alle eine einheitliche Größe aufweisen. Es ist aber auch möglich Öffnungen 8, 9 unterschiedlicher Größe zu kombinieren. Damit der Anordnung von Öffnungen 8, 9 der Querschnitt der Versteifungssohle 3 in diesem Bereich geschwächt wird, sollte auf die Auswirkungen auf das Abrollverhalten der Versteifungssohle 3 geachtet werden, die mit der Festigkeitsverminderung einhergehen.

Im vorliegenden Ausführungsbeispiel ist eine Anordnung gewählt, bei der zwischen zwei größeren Öffnungen 8 mindestens eine kleinere Öffnung 9 liegt. Ferner erkennt man, dass eine Anzahl der Öffnungen 8 und 9 dem Umriss der Versteifungssohle 3 in einheitlichem Randabstand folgt, was einem vom Rand ausgehenden Lösen der Versteifungssohle 3 von der Laufsohle 2 entgegenwirkt. Der Ballenbereich B weist eine höhere Anzahl Öffnungen 8, 9 auf als jeweils die übrigen Bereiche A, C und D, so dass in dem dort stark beanspruchten Bereich eine erhöhte Verbundkraft geschaffen wird.

Zur Herstellung einer erfindungsgemäßen Sohle 1 wird die Versteifungssohle vor dem Spritzgießen quasi schwebend in der Kavität einer Spritzgussform fixiert. Im Zuge des Spritzgießens füllt die Spritzgussmasse die Kavität vollständig aus und umhüllt dabei die Versteifungssohle 3 komplett. Im Zuge der dabei stattfindenden Benetzung der Versteifungssohle 3 durch die Vergussmasse kommt es infolge Adhäsion zu einem flächigen Verbund zwischen Versteifungssohle 3 und Laufsohle 2. Gleichzeitig durchdringt beim Spritzgießen die Vergussmasse auch die Öffnungen 8, 9 und bildet nach dem Erhärten der Vergussmasse Stege 10 aus, die den oberhalb der Versteifungssohle 3 liegenden Bereich der Laufsohle 2 mit dem unterhalb der Versteifungssohle 3 liegenden Bereich kraftschlüssig verbinden und gleichzeitig die Versteifungssohle 3 in ihrer relativen Lage zur Laufsohle 2 verankern.

Auf diese Weise ist gewährleistet, dass selbst bei intensiver Belastung der Sohle 1 im Zuge der Abrollbewegung eines Schuhes der Verbund zwischen Laufsohle 2 und Versteifungssohle 3 erhalten bleibt.

In Figur 1 ist ferner die Spitzensprengung 10 der Sohle 1 dargestellt, die der Erhebung der Sohlenspitze über die Aufstandsfläche entspricht.

## Patentansprüche

1. Sohle für Diabetiker-Schutzschuhe,
mit einer spritzgegossenen Laufsohle (2) und einer in die Laufsohle (2) integrierten Versteifungssohle (3) mit einer gegenüber der Laufsohle (2) größeren Biegesteifigkeit, wobei die Sohle (1) in ihrer Längserstreckungsrichtung untergliedert ist in einen Zehenbereich (A), einen Ballenbereich (B), einen Längsgewölbebereich (C) und einen Fersenbereich (D) und die Versteifungssohle (3) sich zumindest über den Zehenbereich (A), Ballenbereich (B) und über den Längsgewölbebereich (C) der Laufsohle (2) erstreckt und wobei die Versteifungssohle (3) an ihrer der Laufsohle (2) zugewandten Fläche verbundsteigernde Mittel aufweist, wobei die verbundsteigernden Mittel durchgehende Öffnungen (8, 9) in der Versteifungssohle (3) umfassen, welche vom Material der Laufsohle (2) ausgefüllt sind, wobei die in Längserstreckungsrichtung der Versteifungssohle (3) wirksame Biegesteifigkeit geringer ist als die in Quererstreckungsrichtung wirkende, **dadurch gekennzeichnet, dass** in die Versteifungssohle (3) größere Öffnungen (8) und kleinere Öffnungen (9) eingeformt sind, dass die Lochfläche der dem Ballenbereich (B) zugeordneten Öffnungen (8, 9) jeweils größer ist als die der benachbarten Bereiche (A, C) und dass der Ballenbereich (B) eine höhere Anzahl Öffnungen (8, 9) als die übrigen Bereiche (A, C und D) aufweist.

2. Sohle nach Anspruch 1, **dadurch gekennzeichnet, dass** die Öffnungen (8, 9) kreisförmig ausgebildet sind, vorzugsweise mit einem Durchmesser zwischen 1 mm und 10 mm, höchst vorzugsweise zwischen 3 mm und 8 mm.

3. Sohle nach Anspruch 1 bis 2, **dadurch gekennzeichnet dass** die Lochfläche aller Öffnungen (8, 9) mindestens 3 % und/oder maximal 15 % der Fläche der Versteifungssohle (3) beträgt, vorzugsweise zwischen 4 % und 9 % liegt.

4. Sohle nach einem der Ansprüche 1 bis 3, **dadurch gekennzeichnet, dass** mindestens drei Öffnungen (8, 9) auf einer Linie quer zur Mittellinie (7) der Versteifungssohle (3) angeordnet sind.

5. Sohle nach einem der Ansprüche 1 bis 4, **dadurch gekennzeichnet, dass** die Öffnungen (8, 9) zumindest auf einer im Wesentlichen parallel zum Außenumfang der Laufsohle (2) verlaufenden Linie angeordnet sind.

6. Sohle nach einem der Ansprüche 1 bis 5, **dadurch gekennzeichnet, dass** die Versteifungssohle (3) allseitig in die Laufsohle (2) eingebettet ist.

7. Sohle nach einem der Ansprüche 1 bis 6, **dadurch gekennzeichnet, dass** sich die durchgehenden Öffnungen (8, 9) in der Versteifungssohle (3) zumindest über den Zehenbereich (A), den Ballenbereich (B) und den Längsgewölbebereich (C) verteilen.

8. Sohle nach einem der Ansprüche 1 bis 7, **dadurch gekennzeichnet, dass** die Dicke der Versteifungssohle (3) am vorderen, dem Zehenbereich (A) zugeordneten Rand am geringsten ist und in Richtung des in Längsrichtung gegenüberliegenden Randes zunimmt.

9. Sohle nach einem der Ansprüche 1 bis 8, **dadurch gekennzeichnet, dass** die in Längserstreckungsrichtung der Versteifungssohle (3) wirksame Biegesteifigkeit in dem den Längsgewölbebereich (C) bildenden Teil am größten ist.

10. Sohle nach einem der Ansprüche 1 bis 9, **dadurch gekennzeichnet, dass** die Versteifungssohle (3) zumindest in dem den Fersenbereich (D) und/oder Längsgewölbebereich (C) bildenden Teil eine Querwölbung aufweist.

11. Sohle nach einem der Ansprüche 1 bis 10, **dadurch gekennzeichnet, dass** zusätzliche verbundsteigernde Mittel an der Oberfläche der Versteifungssohle (3) angeordnet sind.

12. Sohle nach einem der Ansprüche 1 bis 11, **dadurch gekennzeichnet, dass** die Sprengung der Sohle (1) mindestens 15 mm, vorzugsweise mindestens 20 mm beträgt.

13. Diabetiker-Schutzschuh, **gekennzeichnet durch** eine Sohle (1) gemäß einem der Ansprüche 1 bis 12.

## Claims

1. Sole for protective shoes for diabetic persons, comprising an injection-moulded outsole (2) and a stiffening sole (3) integrated in the outsole (2), which stiffening sole has a greater flexural strength than the outsole (2), the sole (1) being divided in its longitudinal extension direction into a toe region (A), a ball region (B), a longitudinal arch region (C) and a heel region (D), and the stiffening sole (3) extending at least over the toe region (A), ball region (B) and over the longitudinal arch region (C) of the outsole (2), and the stiffening sole (3) comprising bond-enhancing means on the surface thereof facing the outsole (2), the bond-enhancing means comprising continuous openings (8, 9) in the stiffening sole (3) which are filled with the material of the outsole (2), the flexural strength acting in the longitudinal extension direction of the stiffening sole (3) being lower than that which acts in the transverse extension direction, **characterised in that** larger openings (8) and smaller openings (9) are formed in the stiffening sole (3), **in that** the open area of the openings (8, 9) associated with the ball region (B) is in each case greater than the adjacent regions (A, C), and **in that** the ball region (B) comprises a higher number of openings (8, 9) than the rest of the regions (A, C and D).

2. Sole according to claim 1, **characterised in that** the openings (8, 9) are circular, preferably having a diameter of between 1 mm and 10 mm, most preferably between 3 mm and 8 mm.

3. Sole according to claims 1 to 2, **characterised in that** the open area of all of the openings (8, 9) is at least 3% and/or at most 15% of the area of the stiffening sole (3), preferably is between 4% and 9%.

4. Sole according to any of claims 1 to 3, **characterised in that** at least three openings (8, 9) are arranged on a line transversely to the central line (7) of the stiffening sole (3).

5. Sole according to any of claims 1 to 4, **characterised in that** the openings (8, 9) are arranged at least on a line that extends substantially in parallel with the outer periphery of the outsole (2).

6. Sole according to any of claims 1 to 5, **characterised in that** the stiffening sole (3) is embedded on all sides in the outsole (2).

7. Sole according to any of claims 1 to 6, **characterised in that** the continuous openings (8, 9) in the stiffening sole (3) are distributed at least over the toe region (A), the ball region (B), and the longitudinal arch region (C).

8. Sole according to any of claims 1 to 7, **characterised in that** the thickness of the stiffening sole (3) is lowest at the front edge associated with the toe region (A) and increases in the direction of the edge which is opposite in the longitudinal direction.

9. Sole according to any of claims 1 to 8, **characterised in that** the flexural strength acting in the longitudinal extension direction of the stiffening sole (3) is greatest in the part forming the longitudinal arch region (C).

10. Sole according to any of claims 1 to 9, **characterised in that** the stiffening sole (3) has a transverse curvature at least in the part forming the heel region (D) and/or longitudinal arch region (C).

11. Sole according to any of claims 1 to 10, **characterised in that** additional bond-enhancing means are arranged on the surface of the stiffening sole (3).

12. Sole according to any of claims 1 to 11, **characterised in that** the uplift in the sole (1) is at least 15 mm, preferably at least 20 mm.

13. Protective shoe for a diabetic person, **characterised by** a sole (1) according to any of claims 1 to 12.

## Revendications

1. Semelle pour chaussure de sécurité pour diabétiques,
avec une semelle d'usure (2) moulée par injection et avec une semelle raidisseuse (3) intégrée dans la semelle d'usure (2) et présentant une plus grande rigidité en flexion que la semelle d'usure (2), sachant que la semelle (1) est divisée dans la direction de son étendue longitudinale en une région des orteils (A), une région de l'avant renflé de la plante du pied (B), une région de la voûte plantaire (C) et une région du talon (D), et que la semelle raidisseuse (3) s'étend au moins sur la région des orteils (A), la région de l'avant renflé de la plante du pied (B) et la région de la voûte plantaire (C) de la semelle d'usure (2), et sachant que la semelle raidisseuse (3) présente, sur sa face tournée vers la semelle d'usure (2), des moyens favorisant la liaison, sachant que les moyens favorisant la liaison comprennent des ouvertures traversantes (8, 9) dans la semelle raidisseuse (3), qui sont remplies par le matériau de la semelle d'usure (2), sachant que la rigidité en flexion active dans la direction de l'étendue longitudinale de la semelle raidisseuse (3) est inférieure à celle active dans la direction de l'étendue transversale, **caractérisée en ce que** des ouvertures plus grandes (8) et des ouvertures plus petites (9) sont pratiquées dans la semelle raidisseuse (3), **en ce que** la surface d'orifice des ouvertures (8, 9) associées à la région (B) de l'avant renflé de la plante du pied est chaque fois plus grande que celle des régions voisines (A, C), et **en ce que** la région (B) de l'avant renflé de la plante du pied présente un plus grand nombre d'ouvertures (8, 9) que les autres régions (A, C et D).

2. Semelle selon la revendication 1, **caractérisée en ce que** les ouvertures (8, 9) sont réalisées circulaires, de préférence avec un diamètre se situant entre 1 mm et 10 mm, d'une manière la plus préférée entre 3 mm et 8 mm.

3. Semelle selon la revendication 1 ou 2, **caractérisée en ce que** la surface d'orifice de toutes les ouvertures (8, 9) est égale à au moins 3 % et/ou au maximum 15 % de la surface de la semelle raidisseuse (3), de préférence se situe entre 4 % et 9 %.

4. Semelle selon l'une des revendications 1 à 3, **caractérisée en ce qu'**au moins trois ouvertures (8, 9) sont disposées sur une ligne transversale à la ligne médiane (7) de la semelle raidisseuse (3).

5. Semelle selon l'une des revendications 1 à 4, **caractérisée en ce que** les ouvertures (8, 9) sont disposées au moins sur une ligne s'étendant sensiblement parallèlement au pourtour extérieur de la semelle d'usure (2).

6. Semelle selon l'une des revendications 1 à 5, **caractérisée en ce que** la semelle raidisseuse (3) est incorporée de tous côtés dans la semelle d'usure (2).

7. Semelle selon l'une des revendications 1 à 6, **caractérisée en ce que** les ouvertures traversantes (8, 9) dans la semelle raidisseuse (3) se répartissent au moins sur la région des orteils (A), la région de l'avant renflé de la plante du pied (B) et la région de la voûte plantaire (C).

8. Semelle selon l'une des revendications 1 à 7, **caractérisée en ce que** l'épaisseur de la semelle raidisseuse (3) est la plus faible sur le bord avant, associé à la région des orteils (A), et augmente en direction du bord opposé en direction longitudinale.

9. Semelle selon l'une des revendications 1 à 8, **caractérisée en ce que** la rigidité en flexion active dans la direction de l'étendue longitudinale de la semelle raidisseuse (3) est la plus grande dans la partie formant la région de la voûte plantaire (C).

10. Semelle selon l'une des revendications 1 à 9, **caractérisée en ce que** la semelle raidisseuse (3) présente une cambrure transversale au moins dans la partie formant la région du talon (D) et/ou la région de la voûte plantaire (C).

11. Semelle selon l'une des revendications 1 à 10, **caractérisée en ce que** des moyens supplémentaires favorisant la liaison sont disposés sur la surface de la semelle raidisseuse (3).

12. Semelle selon l'une des revendications 1 à 11, **caractérisée en ce que** le galbe de la semelle (1) est d'au moins 15 mm, de préférence d'au moins 20 mm.

13. Chaussure de sécurité pour diabétiques, **caractérisée par** une semelle (1) selon l'une des revendications 1 à 12.
